# EUROPÄISCHE PATENTSCHRIFT

(11) **EP 2 307 119 B1**
(45) Veröffentlichungstag und Bekanntmachung des Hinweises auf die Patenterteilung: **03.12.2014**
(21) Anmeldenummer: 09780781.2
(22) Anmeldetag: 17.07.2009
(51) Int. Cl.: B01D 36/00

(54) **FILTEREINRICHTUNG**
FILTER DEVICE
DISPOSITIF DE FILTRATION

(30) Priorität: 26.07.2008 DE 102008034903
(43) Veröffentlichungstag der Anmeldung: 13.04.2011
(73) Patentinhaber: Mahle International GmbH, 70376 Stuttgart (DE)
(72) Erfinder: BRAUNHEIM, Michael, 73033 Göppingen (DE); GÄNSWEIN, Matthias, 73732 Esslingen (DE); HRODEK, Jörg, A-9125 Mittlern (AT); SIEGLE, Sven, 71364 Winnenden (DE); WLASSA, Richard, 70469 Stuttgart (DE); KLINKSPON, Nelly, 71409 Schwaikheim (DE)
(74) Vertreter: BRP Renaud & Partner mbB Rechtsanwälte Patentanwälte Steuerberater
(86) Internationale Anmeldenummer: PCT/EP2009/059241
(87) Internationale Veröffentlichungsnummer: WO 2010/012615

(56) Entgegenhaltungen:
- EP-A- 0 681 994
- EP-A- 1 462 416
- EP-A- 1 581 736
- DE-A1- 3 905 164
- DE-A1-102006 039 581
- FR-A- 2 840 894

## Beschreibung

Die vorliegende Erfindung betrifft eine Filtereinrichtung gemäß dem Oberbegriff des Anspruchs 1. Die Erfindung betrifft außerdem einen, mit einer derartigen Filtereinrichtung ausgestatteten Verbrennungsmotor sowie ein, mit einem derartigen Verbrennungsmotor ausgestattetes Kraftfahrzeug.

Aus der WO 2007/128599 ist ein transportabler Flüssigkeitsfilter für den Einsatz nach Naturkatastrophen bekannt, der dazu dient, stark verschmutztes Wasser so aufzubereiten, dass es als Trinkwasser verwendet werden kann. In mehreren Filtrationsstufen, wo unter anderem Chemikalien adsorbiert werden, Schwebeteilchen und Schwermetalle herausgefiltert werden und jede Form von biologischer Aktivität, wie Viren, Würmern, Bakterien, Pilzen und Protozoen abgetötet wird, wird das schmutzige Wasser gereinigt. Dieser Flüssigkeitsfilter ist allerdings zu aufwendig, um ihn in einem Kraftfahrzeug zu verwenden, zumal Kraftstoffe nicht unbedingt so stark verschmutzt sind und das abgelassene Wasser nicht zwingend Trinkwasserqualität haben muss.

Aus der EP 1 581 736 und der DE 10 2006 039 581 sind Kraftstofffilter bekannt, bei denen an dem Filtergehäuse ein weiterer Filter zur Reinigung des abgelassenen Wassers angebracht ist. Ein Nachteil dieses Kraftstofffiltertyps ist allerdings, dass sie einen relativ großen Wassersammelraum für aus dem Kraftstoff abgeschiedenem Wasser aufweisen, und deshalb bei Kontamination des Kraftstoffes mit Bakterien, Pilzen oder anderem, ein großes Wasservolumen bereitstellen, in dem sich biologische Aktivitäten entfalten und vermehren können und somit einen Belebtschlamm bilden, der zum einen, da er auf der Reinseite entsteht, den weiteren Fluss des Kraftstoffes behindern kann, sowie evtl. den Kraftstofffilter zusetzt und zum anderen das abzulassende Wasser und den nachgeschalteten Filter zur Reinigung des Wassers verunreinigen kann.

Aus der EP 0 681 994 A1 ist eine Filtereinrichtung bekannt, die als Wasserfilter zur Gewinnung von Trinkwasser ausgebildet ist. Die Filtereinrichtung weist einen Flüssigkeitseinlass, einen Flüssigkeitsauslass und ein in einem Filtergehäuse angeordnetes Filterelement auf. Dieses Filterelement ist als Filterpatrone ausgebildet, so dass gefiltertes Wasser je nach Bedarf erzeugt werden kann.

In der DE 39 05 164 A1 ist ein Keimfilter für Trinkwasser und flüssige Nahrungsmittel beschrieben. Dabei ist der Keimfilter als Durchflussfiltersystem ausgebildet.

Die Aufgabe der vorliegenden Erfindung ist es, einen bekannten Kraftstofffilter so zu verbessern, dass aus dem Kraftstoff abgeschiedenes Wasser, eine höhere Qualität aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einer Filtereinrichtung, insbesondere bei einem Kraft-/Schmierstofffilter, mit zumindest einem Wassersammelraum zum Sammeln von aus dem Kraft-/Schmierstoff abgeschiedenem Wasser, Mittel zur Unterbindung biologischer Aktivitäten vorzusehen und dadurch das abgeschiedene Wasser aufzubereiten bzw. dessen Qualität zu verbessern. Die Filtereinrichtung weist einen Flüssigkeitseinlass, einen Flüssigkeitsauslass, ein Filtergehäuse, ein wechselbares Filterelement und oben genannten Wassersammelraum auf, wobei in letzterem, oben genannte Mittel zur Unterbindung der biologischen Aktivität vorhanden sind, welche insbesondere so ausgebildet sein können, dass sie eine antibakterielle, eine fungizide und/oder eine antibiotische Wirkung haben. Darüber hinaus ist ein Behälter mit Kraftstoff adsorbierendem Material, insbesondere Aktivkohle, vorgesehen und derart angeordnet ist, dass das abgeschiedene Wasser den Behälter von unten nach oben durchströmt.

Hierdurch können optimale Adsorptionsbedingungen erreicht werden.

Weiter wird eine Filtereinrichtung beansprucht, bei welcher die Mittel zur Unterbindung der biologischen Aktivität, Metalle, insbesondere Silber, und/oder Monomere oder Oligomere mit einer funktionalen Ammonium-Gruppe aufweisen. Es kann auch eine mini UV-Leuchtdiode vorgesehen sein, die zusammen mit einer katalytisch aktiven Oberfläche eine biozide Wirkung hat. Alternative kann auch ein Lack mit Signalwirkung, wie im Schiffsbau bekannt, auf den betreffenden Oberflächen vorgesehen werden. Alternativ kann eine geringe Wechselspannung, die im Kraftstofffilter herrscht, das Ansiedeln von Mikroorganismen verhindern.

Diese Maßnahmen verhindern die Bildung von Belebtschlamm im Wasserreservoir. Um zu verhindern, dass der Filter über den Wasserablass kontaminiert wird, kann auch der Auslass biozide Materialien aufweisen, oder der Aktivkohlefilter mit Kupfer- oder Silberionen dotiert sein.

Bei einer vorteilhaften Weiterbildung der Erfindung, ist ein Trägermaterial auf Faserbasis vorgesehen ist, das beispielsweise als Gewirr, als Gestrick oder als Teppich ausgebildet ist und auf welchem die Mittel durch geeignete Beschichtungsverfahren aufgebracht sind. Die Mittel zur Unterbindung der biologischen Aktivität können alternativ auch auf eine strukturierte Fläche, wegen der vergrößerten Oberfläche, durch geeignete Beschichtungsverfahren aufgebracht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen Längsschnitt durch eine erfindungsgemäße Filtereinrichtung,
- Fig. 2: einen Ausschnitt aus Fig.1,
- Fig. 3: eine Draufsicht auf einen Moduleinsatz,
- Fig. 4: eine Seitenansicht mit Schnitt des Moduleinsatzes,
- Fig. 5: eine Schnittdarstellung entlang der Linie A-A aus Fig. 3 des Moduleinsatzes.

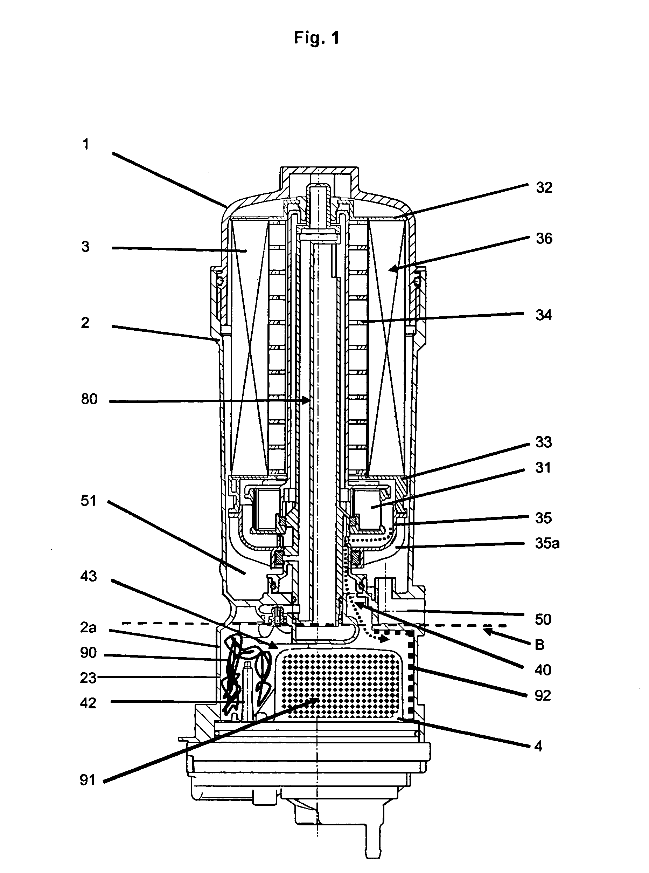

Fig. 1 zeigt die erfindungsgemäße Filtereinrichtung, die hier als Kraftstofffilter ausgebildet ist im Längsschnitt. Ein Filtergehäuse 2, das sowohl ein Filterelement 3, als auch einen Moduleinsatz 4 aufnimmt, kann dabei von oben mit einem Deckel 1 verschlossen werden. Darunter befindet sich ein Kraftstoffverteilraum 51, der mit einem Einlass 50 kommuniziert. Eine Vorabscheidung für größere Teilchen gibt es auch, ist hier aber nicht gezeigt.

Das Filterelement 3 weist eine zylindrische Innenzarge 34 auf, auf der ein Spezialpapier als Filter 36 sitzen kann sowie eine obere Endscheibe 32 und eine untere Endscheibe 33, einen Boden 35 mit Außenverrippung 35a und ein korbförmiges Sieb 31. Beim Zusammenbau des Kraftstofffilters wird das wechselbare Filterelement 3 über einen Funktionsträger 80 geschoben, der fest im Filtergehäuse 2 angebracht ist und die Medien Wasser und Kraftstoff leitet. Das Filterelement 3, kann als Filter 36 feinporiges Spezialpapier oder anderen Materialien enthalten, so dass bereits hier das im Kraftstoff vorhandene Wasser koalesziert und abgeschieden werden kann. Es fliest dann als kleinste Tröpfchen mit dem Kraftstoff zum Sieb 31. Der Kraftstoff gelangt durch dieses Sieb 31 hindurch auf die Reinseite und verlässt das Kraftstofffilter über den Funktionsträger 80 und entsprechende Auslasse (nicht gezeigt). Das korbförmige Sieb 31 ist aus einem lipophilen Material so gestaltet, dass sich die bereits vorhandenen Wassertröpfchen weiter vergrößern und dann von der Schwerkraft nach unten in einen Wassersammelraum 43 transportiert werden. Durch das Filterelement 3 werden Schwebstoffe, die im Kraftstoff enthalten sind, herausgefiltert. Da an Schwebstoffen, die in das abzuscheidende Wasser gelangen fast immer einwenig Kraftstoff hängt, hat man, wenn man das Wasser nach dem Filterelement 3 aus dem Kraftstoff entfernt, weniger Schwebstoffe im Kraftstoff und somit auch weniger Schwebstoffe im abgeschiedenen Wasser. Daher ist es, um möglichst sauberes Wasser zu erhalten, von Vorteil das Abscheiden des Wassers auf der Reinseite des Filterelementes 3 vorzunehmen. In den Wassersammelraum 43 ist von unten in das Filtergehäuse 2 der Moduleinsatz 4 eingesetzt und fest verschraubt oder anderweitig befestigt.

Der Weg des Wassers ist als unterbrochen gezeichneter Pfeil 40 dargestellt. Mit Bezugszeichen 50 ist der Einlass für den Kraftstoff bezeichnet, von hier aus gelangt er in den Kraftstoffverteilraum 51, durch den hohen Druck von etwa 5-10 bar im Kraftstoffsystem, wird der Kraftstoff durch das Filterelement 3 gedrückt. Diese hohen Drücke mit Druckspitzen von über 20 bar, liegen auch im Wassersammelraum 43 vor. Da aber das Innere des Moduleinsatzes 4 nicht druckstabil ist, wird es durch ein druckstabiles Gehäuse 44 geschützt. Ein Wasserstandsensor 42 im Wassersammelraum 43 sorgt dafür, dass, wenn das Wasser eine vorgegebene Höhe erreicht, es in den Moduleinsatz 4 abgelassen wird. Unterhalb der gestrichelten Linie B befindet sich im Filtergehäuse 2 der Wassersammelraum 43. Die Oberfläche einer Innenwand 23 des Teils 2a des Filtergehäuses 2 kann auf der Seite, die zum Wassersammelraum 43 zeigt, speziell beschichtet sein, um biologische Aktivitäten jeder Art zu unterbinden. Alternativ kann die Oberfläche der Innenwand 23 kleine Fortsätze/Ausbuchtungen/Strukturen 92 enthalten, die in der gleichen Weise beschichtet sind. Die Form der Strukturen 92 ist beliebig wählbar, sie kann während des Herstellungsprozesses eingebracht werden oder auch danach. Da das Filtergehäuse 2 aus Aluminium oder schwer entflammbarem Kunststoff sein kann, hängt die Art des Beschichtungsverfahrens von der Art des Filtergehäusematerials ab. Es kann sich dabei um CVD (chemical-vapour-deposition) oder Plasmabeschichtung oder einfach nur um einen Lack handeln. Vorzugweise wird Silber als gewählt, um die biologische Aktivität zu unterbinden, aber auch andere Stoffe wie andere Metalle oder Monomere bzw. Oligomere mit einer funktionalen Ammonium-Gruppe können verwendet werden. Diese Stoffe müssen nicht unbedingt für den Menschen verträglich sein, da sie im Kraftstofffilter zum Einsatz kommen und nicht zur Trinkwasseraufbereitung dienen müssen. Kupfer sollte in dem Bereich, wo es mit dem Kraftstoff selber in Berührung kommt, nicht verwendet werden, da es den Kraftstoff zersetzen kann und dann der Betrieb des Motors gestört wird. Auch andere Metalle müssen diesbezüglich unschädlich für den verwendeten Kraftstoff sein.

Einfacher ist es allerdings in den Wassersammelraum 43 ein Material einzulegen, um die biologische Aktivität im gesammelten Wasser zu unterbinden. Dies ist in Fig. 1 skizziert. Gezeichnet wurde ein loses Gewirr 90 aus Metallfasern oder Kunststofffasem, die selbst die biologische Aktivität unterbinden oder mit einem Stoff überzogen sind, der ebenfalls die biologische Aktivität unterbindet. Hier können dieselben Stoffe verwendet werden, wie bei der Beschichtung der Innenwand 23 des Teils 2a des Filtergehäuses 2. Alternativ kann statt dem Gewirr auch ein Gestrick oder eine Art Teppich aus diesen Fasern, die die biologische Aktivität unterbinden, verwendet werden. Reine Silberfasern wären zwar optimal hinsichtlich der Eigenschaft die biologische Aktivität zu unterbinden, jedoch sind sie sehr teuer, daher ist es sinnvoller mit Silber beschichtete kraftstoffstabile Kunststofffasern zu verwenden. Die Wirkung des Silbers entfaltet sich erst bei Kontakt mit Wasser, also erst wenn eine Mindestmenge an Wasser aus dem Kraftstoff abgeschieden wird. Dann entstehen Silberionen, die die biologische Aktivität unterbinden.

Eine weitere Möglichkeit, um die biologische Aktivität zu unterbinden, besteht darin, das druckstabile Gehäuse 44 des Moduleinsatzes 4 mit den oben genannten Stoffen zu beschichten. Dieses druckstabile Gehäuse 44 hat eine obere Außenfläche 47 und Seitenflächen 48, auf diesen Außenflächen 47 und 48 kann entweder direkt ein derartiger Stoff aufgebracht werden, um die biologische Aktivität zu unterbinden. Es ist auch möglich diese Flächen 47 und 48 während des Herstellungsprozesses zu strukturieren und dann zu beschichten. Das in den Figuren dargestellte Rautenmuster 91 ist lediglich zur Veranschaulichung eingezeichnet. Die Strukturierung 91 der Flächen 47 und 48 kann frei gewählt werden und ist vorzugsweise dreidimensional, bzw. pyramidenförmig.

Die Strukturierung der Innenwand 23 des Teils 2a des Filtergehäuses 2, als auch der Flächen 47, 48 des druckstabilen Gehäuses 44, erhöht deren Oberfläche, die zur Unterbindung der biologischen Aktivität durch eine geeignete Beschichtung verwendet werden kann.

Weitere nicht gezeigte Möglichkeiten die biologische Aktivität zu unterbinden sind zum einen das Anbringen einer Mini-UV-Leuchtdiode im Wassersammelraum 43 zusammen mit einer katalytisch wirkenden Oberfläche aus Platin, Titandioxid etc., die z.B. an der Innenwand 23 des Filtergehäuses 2 angebracht sein kann. Es kann auch einfach eine Metallplatte sein, die in den Wassersammelraum 43 eingelegt wird. Oder das Filtergehäuse 2 selber, wenn es aus Metall hergestellt ist. Die Mini-UV-Leuchtdiode könnte beispielsweise beim Wasserstandssensor 42 untergebracht sein. Es reicht aus, wenn während der Fahrt die Mini-UV-Leuchtdiode eingeschaltet wird, da mit der Zeit nur nach dem Tanken frische biologische Aktivität neu in den Wassersammelraum 43 eingetragen wird. Zum anderen verhindert eine kleine Wechselspannung, wie sie z.B. in der Papierindustrie verwendet wird, die im Wassersammelraum 43 herrscht, ebenfalls die Ansiedlung von Belebtschlamm.

Es könnte alternativ auch eine Stärkekapsel im Wassersammelraum 43 vorliegen, die bei Kontakt mit Wasser die bioziden Stoffe abgibt und sich nach und nach auflöst, beim Filterwechsel müsste diese dann erneuert werden, da durch den Neueintrag von Kraftstoff ständig neue biologische Aktivität in die Filtereinrichtung gelangt.

Andere Alternativen sind auch die Beschichtung der Innenwand 23 des Filtergehäuses 2 mit hydrophoben Beschichtungen mit Signalwirkung oder Antifouling Lacke, die aus dem Schiffsbau bekannt sind.

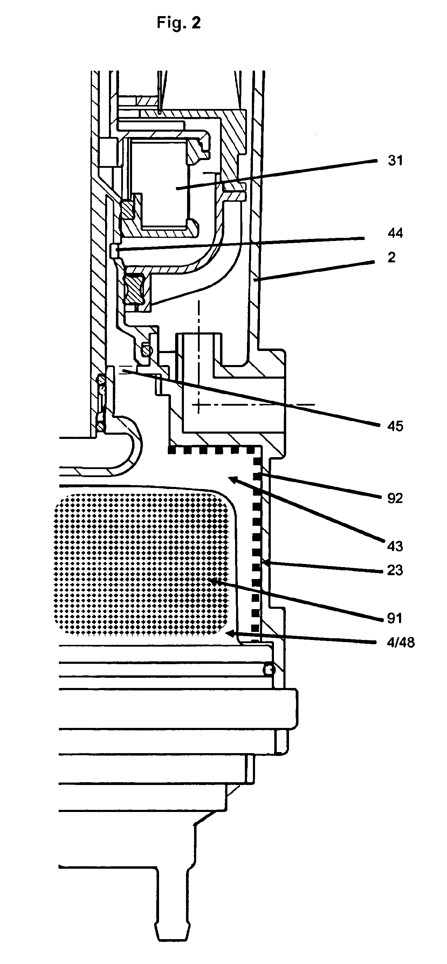

In Fig. 2 ist eine Detailansicht aus Fig.1 zu sehen, wobei die an der Innenwand 23 vorhandene Strukturen 92 hier im Detail dargestellt sind. Die exakte Form ist frei wählbar, bevorzugt ist allerdings eine nicht gezeigte Pyramidenform.

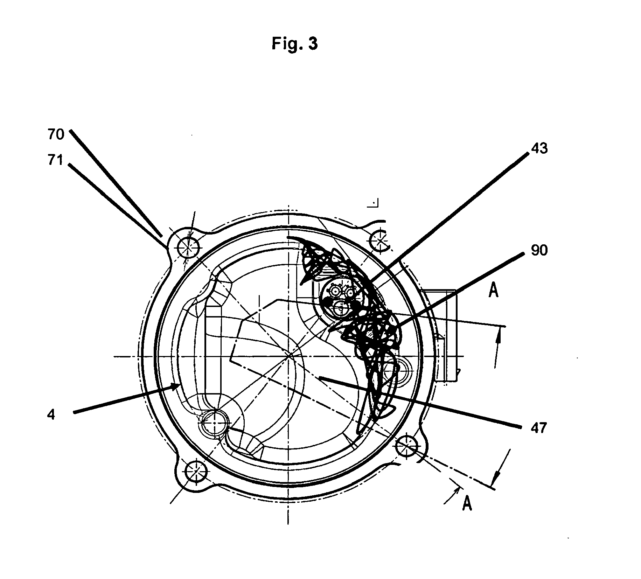

In Fig. 3 ist eine Draufsicht auf den Moduleinsatz 4 zu sehen. Um mindestens einen Wasserstandsensor 42 aufnehmen zu können, weicht das druckstabile Gehäuse 44 von der Kreisform ab. Mittels Öffnungen 71 in Ausbuchtungen 70, kann der Moduleinsatz 4 am Filtergehäuse 2 befestigt werden, z.B. mittels Schrauben. Im Bereich um die Wasserstandssensoren 42 herum, ist im Wassersammelraum 43 genügend Platz, so dass man das Gewirr 90 dort unterbringen kann. Auf der Fläche 47 des druckstabilen Gehäuses 44 kann alternativ zum Gewirr 90 eine Strukturierung 91, wie Fig. 1 und Fig. 2 gezeigt, vorgesehen sein (in Fig. 3 nicht gezeigt).

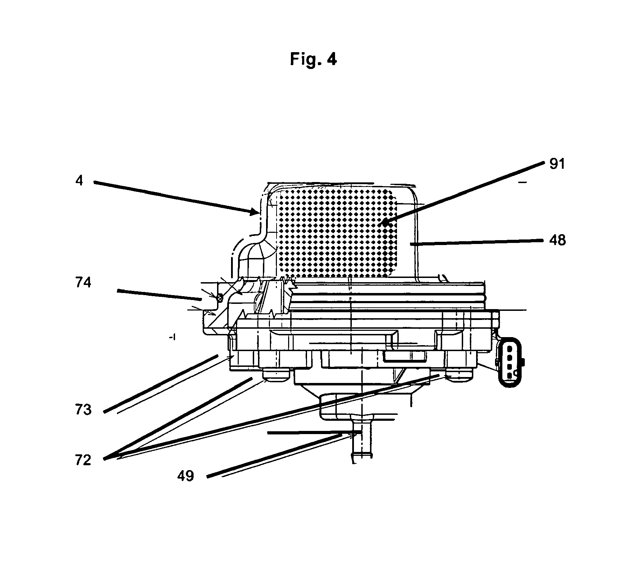

In Fig. 4 ist eine Außenansicht des Moduleinsatzes 4 zu sehen. Er ist mehrteilig aufgebaut, wobei an dem druckstabilen Gehäuse 44 der Boden 73 befestigt ist, z.B. durch Schrauben 72 oder ähnlichem. Zur Abdichtung zum Filtergehäuse 2 wird eine Dichtung 74 verwendet. Über einen Ablauf 49 wird das gereinigte und nun saubere Wasser in die Umgebung abgelassen. Die auf der Seitenfläche 48 angebrachte Strukturierung 91 ist hier nur schematisch skizziert.

Durch die Verwendung von Stoffen, die die biologische Aktivität unterbinden, bildet sich im Wassersammelraum 43 kein Belebtschlamm (engl. activated sludge). Obwohl in dem erfindungsgemäßen Kraftstofffilter der Wassersammelraum 43 sehr klein ist, könnte es bei längeren Standzeiten des Wassers im Wassersammelraum 43 zur Bildung eines Belebtschlammes kommen. Dies wird schon durch kleine Mengen an Stoffen, die die biologische Aktivität unterbinden, verhindert. Dadurch wird auch verhindert, dass mit biologisch aktiven Mikroben verunreinigtes Wasser in den Moduleinsatz 4 gelangt, dessen feine Strömungskanäle 63, 66, 69 sehr schnell zugesetzt wären. Außerdem würde in dem Behälter 61 vorhandene Aktivkohle das Wachstum der biologisch aktiven Mikroben fördern, so dass es sinnvoll ist, diese vorher abzutöten. Ein vergleichsweise kleines Sieb 64 hält diese kleinen Mengen an biologisch toten Schwebstoffen zurück.

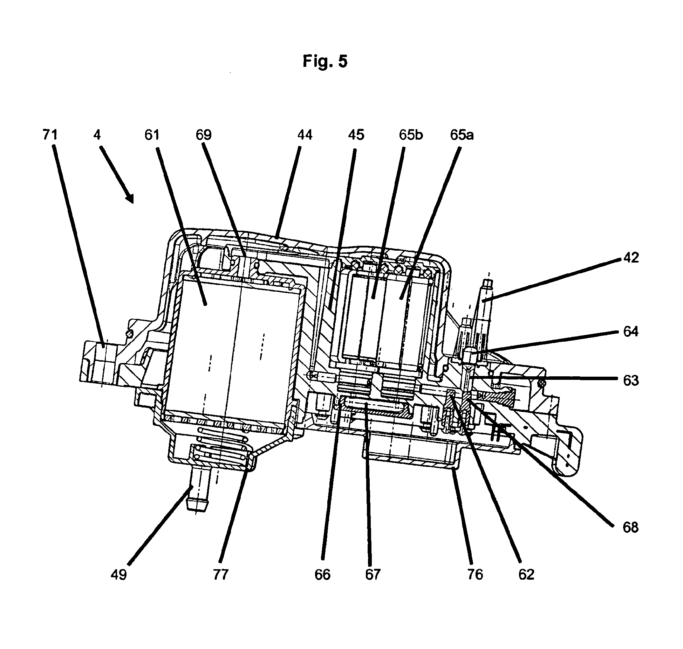

Fig. 5 zeigt das Innere des Moduleinsatzes 4 entlang des Schnittes A-A aus Fig. 3. Das aus dem Kraftstoff abgeschiedene Wasser, das sich im Wassersammelraum 43 gesammelt hat, nimmt folgenden Weg, wenn die Wasserstandssensoren 42, die Ventile 65a und 65b, z.B. Magnetventile, öffnen. Zunächst fließt das Wasser durch das kleine Sieb 64 in den Strömungskanal 63, in dem sich weitere Sensoren 68 befinden. An den Strömungskanal 63 schließen sich die beiden Ventile 65a und 65b an. Zwischen den Ventilen 65a und 65b liegt im Strömungskanal 66 ein Verdrängerelement 67, der das Einfrieren des Wassers an dieser Stelle verhindern soll, siehe hierzu die DE 10 2007 054 770. Über einen Strömungskanal 69 gelangt das Wasser schließlich noch in einen Behälter 61, der als Reinigungskartusche ausgebildet ist und daher ausgewechselt werden kann. Im Behälter 61 können verschiedene Materialien sein, die den verbliebenen Rest an Kraftstoff, der noch im abgelassenen Wasser enthalten ist, absorbieren. Im Behälter 61 kann als absorbierendes Material sowohl Aktivkohle, als auch ein Kraftstoff aufnehmendes Gewebe, Gewirr, Textilien, Teppich oder ähnliches sein. Sogar das Material des Behälters 61 selbst kann so ausgebildet sein, dass es durch die Aufnahme von Kraftstoff quillt und somit dem abgeschiedenen Wasser den Restkraftstoff entzieht. Ziel ist es, dass das abgeschiedene Wasser nur noch etwa 2 ppm Kraftstoffrest enthält, dieser Anteil wird als ungefährlich für die Umwelt betrachtet.

Der Moduleinsatz 4 setzt sich zusammen aus dem druckstabilen Gehäuse 44 und einem Innenteil 45, in dem die Kanäle 63, 66 und 69 angeordnet sind. Verschlossen wird der Moduleinsatz 4 von unten zum einen mit einem Boden 76 der fest mit dem Innenteil 45 verbunden ist und einem unteren Deckel 77, der es ermöglichen soll, den Behälter/Reinigerkartusche 61 zu wechseln. Alternativ kann der untere Deckel 77 auch fest, z.B. durch Schweißen mit dem Innenteil 45 und dem druckstabilen Gehäuse 44 verbunden sein.

Der wasserführende Strömungskanal 69 und der Behälter 61 im Moduleinsatz 4, die sich stromab der Magnetventile 65a und 65b befinden, sollten möglichst langsam leer laufen, um die Adsorptionsbedingungen in dem Behälter 61 zu verbessern. Optimale Adsorptionsbedingungen herrschen bei einer bestimmten Strömung des abgeschiedenen Wassers durch den Behälter 61, vorzugsweise strömt es von unten nach oben, alternativ kann es auch wie hier gezeigt von oben nach unter strömen. Die hierzu notwenigen Strömungskanäle 63, 66, 69 werden je nach Bedarf in dem Innenteil 45 vorgesehen. Der Strömungskanal 69 nach den Magnetventilen 65a/b ist drucklos mit Luftpolster ausgestaltet, wobei diese Volumenreserve zur Aufnahme von Volumenänderungen, wie z.B. beim Einfrieren, dient. Daher ist auch das druckstabile Gehäuse 44 notwendig, um diesen Bereich vom Druck im Kraftstoff abzuschirmen.

Durch die freie Belüftung des Ablaufs 49 nach dem Behälter 61 mit Aktivkohlefilter kann das Wasser aus diesem Bereich und evtl. nachfolgend angeschlossenen Leitungen ablaufen (nicht gezeigt). Es kann auch ein Belüftungsventil in dem Strömungskanal 69 stromaufwärts des Behälters 61 vorhanden sein, welches dazu dient, dass Luft eindringen kann und dass das Wasser aus dem nachfolgenden Behälter 61 und Leitungen abläuft. Dieses Belüftungsventil öffnet drucklos oder bei Unterdruck und schließt bei Druck (nicht gezeigt).

Die weiteren Sensoren 68 können ein Temperatursensor und eine Heizung zum Auftauen oder Betrieb bei Minusgraden sein, der Einsatz des Temperatursensors 68 und die zugehörige Signalverarbeitung sollen bewirken, dass die Magnetventile 65 bei Minusgraden nicht geöffnet werden.

Der Moduleinsatz 4 weist einen integrierten Aufbau auf, d.h. er enthält die gesamte Leitungsführung für das aus dem Kraftstoff abgeschiedene Wasser durch die im Innenteil 45 integrierten Strömungskanäle 63, 66 und 69. Der Moduleinsatz 4 bietet die Aufnahmegeometrie für die Magnetventile 65, er integriert den Behälter 61 mit dem Absorber fest oder wechselbar, er hat Anschluss an die Stromversorgung, er leitet Ströme und Signale durch oder bietet Bauraum für Bauteile zur Signalverarbeitung. Des Weiteren nimmt er die Wasserstandssensoren 42 für die Detektion von Wasser auf, die in den Wassersammelraum 43 des Filtergehäuses 2 ragen. Die Magnetventile 65 sind so ausgebildet, dass diese stromlos geschlossen sind. Die Anordnung der Magnetventile 65 ist so, dass zumindest bei einem Magnetventil der Kraftstoffdruck das Ventil zudrückt und das Ventil gegen den Kraftstoffdruck öffnen muss.

Der Moduleinsatz 4 ist dreiteilig aufgebaut, um dessen Einbau in das Kraftstofffiltergehäuse 2 zu erleichtern. Der Wassersammelraum 43 wird gebildet durch die Freiräume zwischen Moduleinsatz 4 und Filtergehäuse 2. Das druckstabile Gehäuse 44 übernimmt die Aufnahme der Kräfte aufgrund des Kraftstoffdruckes. Das Gehäuse 44 kann aus Alu oder schwer entflammbaren Kunststoffen sein und gewährleistet dadurch ausreichend lange die Dichtheit des Kraftstoffsystems, auch bei Fahrzeugbrand.

Auch im Moduleinsatz 4 können die Oberflächen des Innenteils 45, z.B. der Strömungskanäle 63, 66, 69 die mit dem abgeschiedenen Wasser in Berührung kommen, mit entsprechenden Beschichtungen versehen sein. Von Vorteil ist es hier insbesondere die Aktivkohle im Behälter 61 mit Kupfer oder Silber zu dotieren oder andere biozide Stoffe im Behälter 61 einzusetzen. Dadurch kann eine Rückwärtskontamination der Filtereinrichtung 1 über den Ablauf 49 verhindert werden. Da der Ablauf je nach Bedarf das Wasser direkt in die Umgebung ablaufen lässt, kann über ihn eine Kontamination der Filtereinrichtung erfolgen. Das Sieb 64 das unterhalb des Wasserstandssensors 42 im Moduleinsatz 4 eingebaut ist, dient dazu Schwebstoffe aus dem abgeschiedenen Wasser heraus zu filtern. Es kann selber auch eine biozide Beschichtung aufweisen oder aus Kupfer oder Silber sein.

Denkbar ist auch eine Bestrahlung zumindest von Teilen der Filtereinrichtung mit Gamma oder Betastrahlung vor einem versandfertigen Verpacken derselben, wodurch eine vorzeitige Beaufschlagung mit biologisch aktivem Material bzw. Lebewesen vermieden werden kann.

## Patentansprüche

1. Kraft-/Schmierstofffilter mit einem Flüssigkeitseinlass (50) und einem Flüssigkeitsauslass, einem Filtergehäuse (2), zumindest einem Filterelement (3) und wenigstens einem Wassersammeiraum (43) zum Sammeln von aus dem Kraft-/Schmierstoff abgeschiedenem Wasser,
**dadurch gekennzeichnet,**
- **dass** ein Behälter (61) mit Kraftstoff adsorbierendem Material, insbesondere Aktivkohle, vorgesehen und derart angeordnet ist, dass das abgeschiedene Wasser den Behälter (61) von unten nach oben durchströmt,
- **dass** zumindest im Wassersammelraum (43) Mittel (90, 91, 92) zur Unterbindung biologischer Aktivitäten vorhanden sind, die so ausgebildet sind, dass sie eine antibakterielle, eine fungizide und/oder eine antibiotische Wirkung haben.

2. Kraft-/Schmierstofffilter nach Anspruch 1,
**dadurch gekennzeichnet,**
- **dass** der Behälter (61) als Reinigungskartusche ausgebildet und auswechselbar ist, und/oder
- **dass** im Behälter (61) ein Kraftstoff aufnehmendes Gewebe, Gewirr, Textilien oder ein Teppich angeordnet ist, und/oder
- **dass** das Material des Behälters (61) so ausgebildet ist, dass es durch die Aufnahme von Kraftstoff quillt und somit dem abgeschiedenen Wasser den Restkraftstoff entzieht.

3. Kraft-/Schmierstofffilter nach Anspruch 1,
**dadurch gekennzeichnet,**
**dass** die Mittel (90, 91, 92) Metalle, insbesondere Silber und/oder Monomere oder Oligomere mit einer funktionalen Amino-Gruppe aufweisen.

4. Kraft-/Schmierstofffilter nach einem der Ansprüche 2 oder 3,
**dadurch gekennzeichnet,**
**dass** ein Trägermaterial auf Faserbasis vorgesehen ist, das beispielsweise als Gewirr (90), als Gestrick oder als Teppich ausgebildet ist und auf welchem die Mittel (90, 91, 92) durch geeignete Beschichtungsverfahren aufgebracht sind.

5. Kraft-/Schmierstofffilter nach Anspruch 4,
**dadurch gekennzeichnet,**
**dass** das Trägermaterial gemäß dem Anspruch 5 oder ein alternatives, flächiges Trägermaterial mit einer antibiotische, insbesondere mit einer antibakteriellen, Beschichtung, eine strukturierte Oberfläche (91, 92, 23, 47, 48) aufweist.

6. Kraft-/Schmierstofffilter nach einem der Ansprüche 1 bis 5,
**dadurch gekennzeichnet,**
**dass** dem Wassersammelraum (43) nachgeschaltet ein Aktivkohlefilter angeordnet ist, wobei die Aktivkohle mit Kupfer- oder Silber-Ionen dotiert ist.

7. Kraft-/Schmierstofffilter nach einem der Ansprüche 1 bis 6,
**dadurch gekennzeichnet,**
**dass** ein Absorber vorgesehen ist, an dessen Zulauf ein Kupfersieb angeordnet ist.

8. Kraft-/Schmierstofffilter nach einem der Ansprüche 1 bis 7,
**dadurch gekennzeichnet,**
**dass** die Mittel (90, 91, 92) als Stromquelle, insbesondere als eine Wechselstromquelle, oder als eine Lichtquelle, insbesondere als eine UV-Lichtquelle, ausgebildet sind.

9. Verbrennungsmotor mit einem Kraft-/Schmierstofffilter nach einem der Ansprüche 1 bis 8.

10. Kraftfahrzeug mit einem Verbrennungsmotor nach Anspruch 9.

## Claims

1. A fuel/lubricant filter having a fluid inlet (50) and a fluid outlet, a filter housing (2), at least one filter element (3) and at least one water collection chamber (43) for collecting water separated from the fuel/lubricant,
**characterized in**
- **that** a container (61) containing fuel-adsorbing material, in particular active carbon, is provided and is arranged in such a manner that the separated water flows from the bottom up through the container (61),
- **that** means (90, 91, 92) for suppressing biological activities is provided at least in the water collection chamber (43), which means is formed such that it has an antibacterial, fungicidal and/or antibiotic effect.

2. The fuel/lubricant filter according to claim 1, **characterized in**
- **that** the container (61) is formed as a cleaning cartridge and is exchangeable, and/or
- **that** a fuel-absorbing fabric, nonwoven, textiles or a carpet is arranged in the container (61), and/or
- **that** the material of the container (61) is formed such that it expands due to the absorption of fuel and thus extracts the residual fuel from the separated water.

3. The fuel/lubricant filter according to claim 1,
**characterized in**
**that** the means (90, 91, 92) comprises metals, in particular silver and/or monomers or oligomers with a functional amino group.

4. The fuel/lubricant filter according to claim 2 or claim 3,
**characterized in**
**that** a fiber-based carrier material is provided which is formed as a nonwoven (90), knitted fabric or as a carpet, for example, and onto which the means (90, 91, 92,) is applied by suitable coating methods.

5. The fuel/lubricant filter according to claim 4,
**characterized in**
**that** the carrier material according to claim 5 or an alternative flat carrier material having an antibiotic, in particular, an antibacterial coating has a structured surface (91, 92, 23, 47, 48).

6. The fuel/lubricant filter according to any one of claims 1 to 5,
**characterized in**
**that** an active carbon filter is arranged downstream of the water collection chamber (43), wherein the active carbon is doped with copper ions or silver ions.

7. The fuel/lubricant filter according to any one of the claims 1 to 6,
**characterized in**
**that** an absorber is provided, at the intake of which a copper screen is arranged.

8. The fuel/lubricant filter according to any one of claims 1 to 7,
**characterized in**
**that** the means (90, 91, 92) is formed as a current source, in particular as an alternating current source, or as a light source, in particular a UV light source.

9. An internal combustion engine having a fuel/lubricant filter according to any one of claims 1 to 8.

10. A motor vehicle having an internal combustion engine according to claim 9.

## Revendications

1. Filtre à carburant/lubrifiant comportant une admission de liquide (50) et un échappement de liquide, un logement de filtre (2), au moins un élément de filtre (3) et au moins un espace d'accumulation d'eau (43) pour accumuler l'eau séparée du carburant/lubrifiant, **caractérisé en ce que**
- un récipient (61) est prévu avec un matériau absorbant le carburant, notamment du charbon actif, et disposé de telle sorte que l'eau séparée traverse le récipient (61) du bas vers le haut,
- au moins dans l'espace d'accumulation d'eau (43) des moyens (90,91,92) pour empêcher des activités biologiques sont présents, qui sont conçus de telle sorte qu'ils aient une action antibactérienne, fongicide et/ou antibiotique.

2. Filtre à carburant/lubrifiant selon la revendication 1, **caractérisée en ce que**
- le récipient (61) est conçu comme une cartouche de nettoyage et remplaçable et/ou
- dans le récipient (61) est disposé un tissu, treillis, textile ou un tapis absorbant le carburant et/ou
- le matériau du récipient (61) est conçu de telle sorte qu'il se gonfle du fait de l'absorption du carburant et extrait ainsi l'eau séparée du carburant résiduel.

3. Filtre à carburant/lubrifiant selon la revendication 1, **caractérisé en ce que** les moyens (90,91,92) présente des métaux, notamment de l'argent et/ou des monomères ou des oligomères avec un groupe amino fonctionnel.

4. Filtre à carburant/lubrifiant selon une des revendications 2 ou 3, **caractérisé en ce que** un matériau porteur à base de fibres est prévu, qui est conçu par exemple comme un treillis (90), comme un tricot ou comme un tapis et sur lequel les moyens (90,91,92) sont appliqués par un procédé de revêtement approprié.

5. Filtre à carburant/lubrifiant selon la revendication 4, **caractérisée en ce que** le matériau porteur selon la revendication 5 ou un matériau porteur alternatif avec un revêtement antibiotique, notamment antibactérien présent une surface structurée (91,92,23,47,48).

6. Filtre à carburant/lubrifiant selon une des revendications 1 à 5, **caractérisé en ce que** l'espace d'accumulation d'eau (43) est disposé en amont d'un filtre à charbon actif, dans lequel le charbon actif est dopé avec des ions cuivre ou argent.

7. Filtre à carburant/lubrifiant selon une des revendications 1 à 6, caractérisé ce que un absorbeur est prévu, sur la conduite d'amenée duquel un tamis en cuivre est disposé.

8. Filtre à carburant/lubrifiant selon une des revendications 1 à 7, **caractérisé en ce que** les moyens (90,91,92) sont conçus comme une source de courant, notamment comme source de courant alternatif ou comme une source de lumière, notamment comme une source de lumière UV.

9. Moteur à combustion interne comportant un filtre à carburant/lubrifiant selon une des revendications 1 à 8.

10. Véhicule automobile comportant un moteur à combustion interne selon la revendication 9.
